# EUROPEAN PATENT APPLICATION

(11) **EP 2 365 237 A1**
(43) Date of publication of application: **14.09.2011**
(21) Application number: 10380032.2
(22) Date of filing: 11.03.2010
(51) Int. Cl.: F16K 5/06, F16K 11/087, F16K 27/06, B01D 35/04

(54) **Three-way valve**

(71) Applicant: Valvulas Arco, S.L., 46134 Foios (Valencia) (ES)
(72) Inventor: Ferrer Beltrán, Jose Maria, 46134 Foios (ES)
(74) Representative: Molina Garcia, Julia

(57) **Abstract**

The invention relates to a three-way valve for supplying fluids, of the type including an inlet (2) and two outlets (3,4) structured based on a body (1) which generally adopts a "T" shape, wherein the outlets (3,4) are mutually aligned with one another and extend in a direction which is perpendicular to the direction of the inlet duct (2). The three-way valve includes a single flow valve, with a plug (12) provided with a single passage (13) with a straight development, said flow valve being positioned in the inlet duct (2), through a valve neck (8) in a location close to the meeting node of both branches of the "T". The valve body (1) includes a tubular portion (6) projected outwardly from the meeting node of the branches of the "T" in axial coincidence with the inlet duct (2), this tubular portion (6) being closed at its end with a threaded stopper (7) which internally includes a cylindrical wall for possibly housing a removable filter element (21), which filters the flow of fluid before it reaches the access to both outlet conduits (3,4).

## Description

### Object of the Invention

The present invention relates to a three-way valve which provides essential features of novelty and considerable advantages with respect to the means known and used for the same purposes in the current state of the art.

More particularly, the invention develops a three-way valve which is substantially simplified with respect to similar valve models known in the state of the art, structured based on a T-shaped body, in which there are distinguished an inlet conduit or channel and two outlet conduits or channels arranged in a mutually aligned manner in relation to one another and in a direction which is perpendicular to the inlet conduit, with a single flow control valve, of the quarter-turn type, incorporated in the inlet channel and simultaneously controlling the passage of fluid towards the two outlet conduits. The inlet conduit extends beyond the meeting point with both outlet conduits, by means of a conduit portion of a predetermined length, closed at its free end by means of a threaded stopper on the likewise threaded outer surface of said extension portion, said stopper showing an inner housing with a substantially cylindrical configuration allowing the possible insertion of a filter element with identical configuration, either of the removable type or formed in a single part with said stopper, to interfere with the passage of fluid towards both outlet conduits.

The field of application of the invention is comprised within the industrial sector dedicated to the manufacture of valves for fluids, especially those intended for the connection of domestic apparatuses (washing machines, dishwashers, etc.), to the water supply network.

### Background and Summary of the Invention

Valves for fluids are devices specifically designed for being intercalated between a conduit for supplying fluid and an apparatus of consumption thereof, for the purpose of being able to perform a fluid supply/cutoff by means of opening or closing, from the outside, the control which operates the rod associated with the plug device incorporated in the passage conduit of the valve. Multiple valve models for fluids are known in the state of the art, configured as valves with two, three or even a larger number of ways, with a manual or motor-drive operation, i.e., normal valves in which the plug is operated by means of an electric motor.

In the case of three-way valves, they are distribution valves to allow the passage of a fluid linearly or in a right angle, with a view to blocking certain circuits for channeling the fluids towards the points of interest. European patent document number EP-03380144, which underlies the basis of the present invention, describes a three-way valve structured based on a body with three ducts arranged in a "T" shape, an inlet duct and two outlet ducts, the latter two being aligned with one another and extending in a direction orthogonal to the direction of the inlet duct, in which the inclusion of two flow valves has been provided, with a first flow valve located in the intersection of the branches of the "T" and a second flow valve arranged in one of the outlet ducts. The first flow valve includes a plug with a first straight passage channel and a second L-shaped passage channel, such that depending on the position adopted by the plug, the passage can be opened for both outlet ducts, or the passage towards the first outlet duct can be closed; the second flow valve is incorporated in the second outlet duct, and includes a plug with a straight passage channel, whereby it can move between the opening position and the closing position. Thus, combining the action on both flow valves, the state of both outlets is controlled at the user's will.

The objective of the three-way valve proposed by the present invention is to considerably simplify the three-way valve described in the European patent briefly summarized above, and to furthermore allow the fluid passing through the valve from the inlet duct to both outlet ducts to be possibly filtered. This objective has been fully reached by means of the three-way valve which will be the object of description below, the main features of which are included in the characterizing portion of the attached claim 1.

Essentially, the invention proposes the embodiment of a three-way valve controlled by means of a single flow valve with a plug positioning control of the quarter-turn type, by means of which the passage of a fluid from an inlet conduit or channel towards two outlet conduits or channels is regulated simultaneously. The valve comprises a valve body which generally adopts a "T" shape, in which there are distinguished an inlet conduit or channel and two outlet conduits or channels, with the latter two aligned with one another and arranged in a direction perpendicular to the direction of the inlet conduit or channel. The inlet conduit or channel extends beyond the intersection of both branches of the "T", by means of a segment of a predefined length, having its free end closed by means of a threaded stopper on the outer surface of said extended segment. A single plug device, integral with a rod operated from the outside by means of a quarter-turn control, allows opening/closing the passage of fluid from the inlet conduit towards both outlet conduits, for which the plug device includes a single passage hole with a straight development. The valve has the particularity that the mentioned closing stopper is configured such that it is internally projected to form an inner housing with a preferably cylindrical shape, adapted and sized to optionally house therein a filter element, either removable or integral with said closing stopper, said filter element being in any case of a length such that it internally exceeds the intersection of both branches, such that said filter, when it is present, is traversed by all the fluid which will then exit through both outlet ducts, and with the advantage that the filter is removable by means of unscrewing said stopper, for its consequent cleaning and subsequent reuse by new incorporation in its previous location.

Where appropriate, when the filter and the stopper are integrated in a single part, the filter can likewise be cleaned by means of unscrewing the stopper for the removal of the filter from inside the valve, and the filter-stopper assembly can be again positioned in the valve by means of screwing the stopper.

With a three-way valve embodiment like the one which has just been defined, the traditional concept of three-way valve is considerably simplified without any reduction in its operational capacity, and with the additional capacity of allowing the incorporation of a means capable of filtering the fluid inside the valve before it reaches both outlet ducts.

### Brief Description of the Drawings

These and other features and advantages of the invention will be more clearly shown from the following detailed description of a preferred embodiment thereof, given only in an illustrative and non-limiting manner, with reference to the attached drawings, in which:
Figure 1 is a perspective schematic depiction illustrating a three-way valve constructed according to the concepts of the present invention;
Figure 2 depicts a perspective schematic exploded depiction of the three-way valve of Figure 1;
Figure 3 is a perspective schematic depiction illustrating an embodiment of three-way valve provided with a filter element, and
Figure 4 is a longitudinal section view according to a section made in correspondence with the mid-plane of the three-way valve of the previous figures.

### Description of a Preferred Embodiment

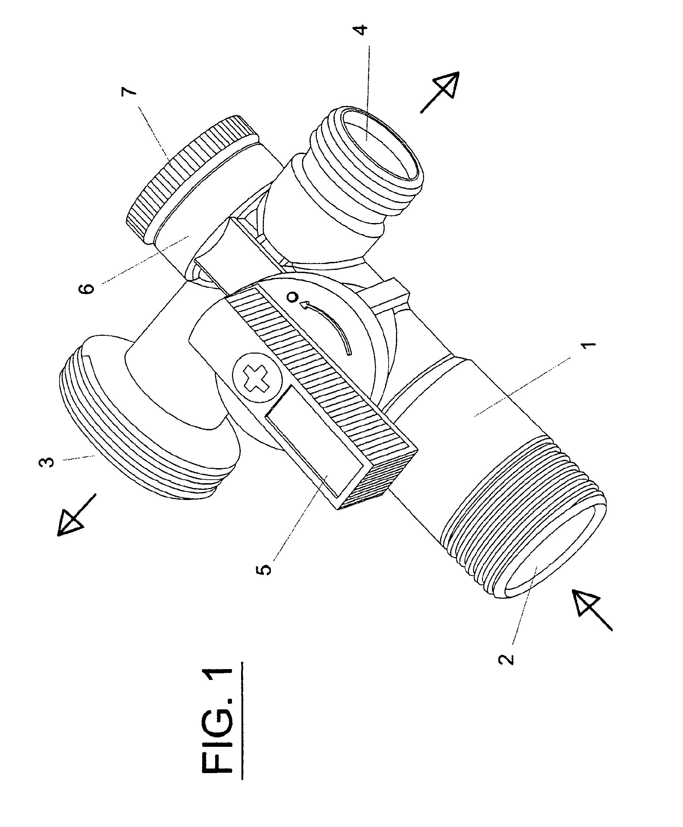

As has been mentioned above, the detailed description of the preferred embodiment of the object of the invention, will be carried out below with the aid of the attached drawings, through which identical reference numbers are used to designate the identical or equivalent parts. Thus, considering first Figure 1 of the drawings, it shows a general schematic depiction of a three-way valve constructed according to a preferred embodiment of the present invention, in which there is distinguished a body of a single part, generally indicated with the reference number 1, for example metallic, which adopts a "T" shape, in which there are distinguished a first duct 2 forming the inlet to the three-way valve, and two outlet ducts 3, 4, aligned with one another, and extended in a direction generally perpendicular to the direction of the inlet duct 2. According to the invention, the three-way valve 1 comprises a single flow valve, arranged in the inlet duct in a position close to the meeting node with the outlets 3, 4, and operable from the outside by means of a conventional quarter-turn control 5. On the opposite side of the intersection between the inlet duct and both outlet ducts, there is a tubular portion of a predefined length, opposite the inlet duct 2 and aligned therewith, generally indicated with reference number 6, with its end closed by means of a threaded stopper 7 on the outer surface of said tubular portion.

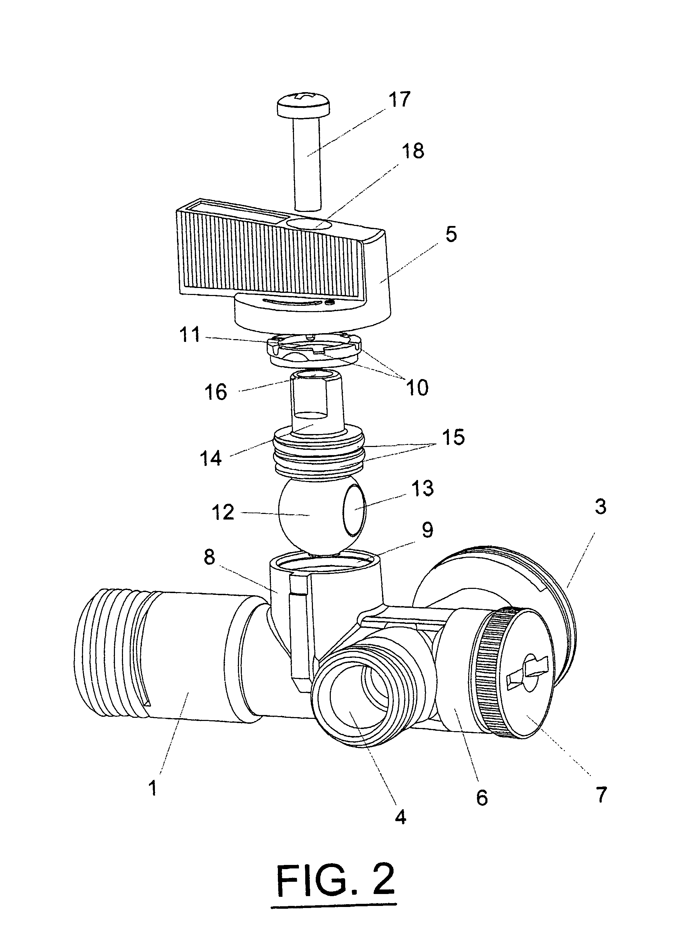

With reference now to Figure 2 of the drawings, a perspective schematic exploded depiction of the three-way valve of the invention can be seen. According to said depiction, it is observed that the single flow valve incorporated in the three-way valve has been made based on a generally cylindrical neck portion 8, emerging orthogonally with respect to the general plane of the valve body 1, which in the vicinity of its opening includes an inner cylindrical groove 9 for allowing the insertion of retaining tabs 10 projecting outwardly from regularly spaced positions of the periphery of a circular part 11 forming a securing and retaining clamp for a rod 14 associated to the plug means included in the flow valve. This plug means includes an inner sphere 12 integral with said rod 14, provided with a straight hole 13 for the passage of fluid, said rod 14 showing a cylindrical widening provided with annular recesses in which O-rings 15 have been arranged to assure the tightness of the assembly by the support of said O-rings against the inner surface of the valve neck 8, and the rod 14 being likewise provided with an axial hole 16 in relation to the free end, which is internally threaded, for fixing the operating control 5 with the aid of a screw 17 passing through a hole 18 made in said control.

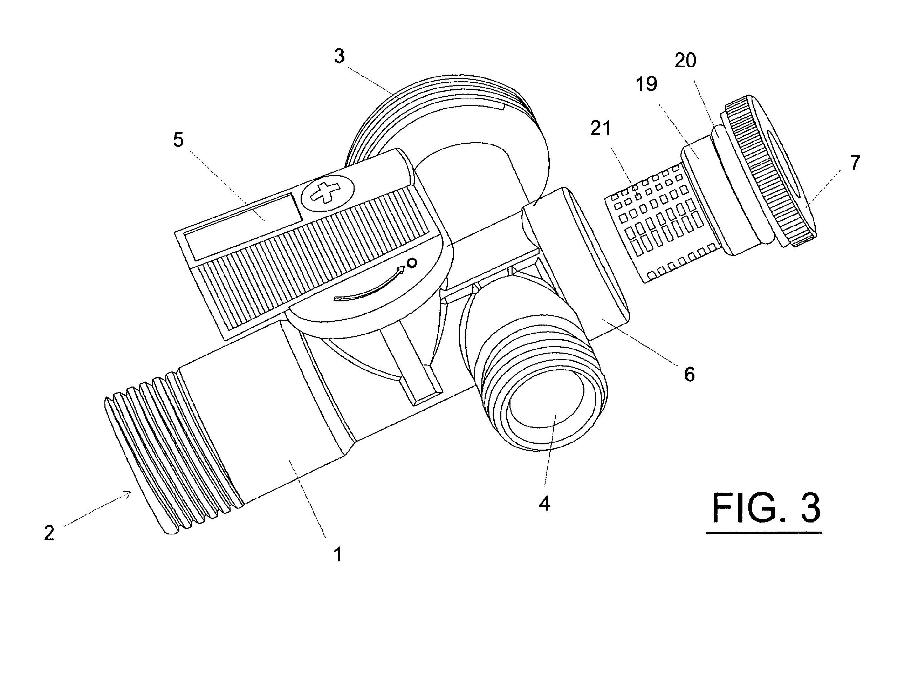

With reference to Figure 3, a perspective schematic view is seen of a three-way valve equivalent to Figure 1, but with the stopper 7 separated from the rest of the valve body. As has been depicted, said stopper 7 internally incorporates a cylindrical wall portion 19 of a small length, externally threaded for its coupling inside the mentioned tubular portion 6 projected from the valve body 1 in axial coincidence with the inlet conduit 2, such that the mentioned cylindrical wall 19 provides a housing which allows housing therein a filter element 21 which in a first embodiment can be of a removable type, such that its incorporation in the valve can be optional, or which in a second embodiment can be integral with the stopper 7, forming a single part with the latter, being of a length sufficient to be projected through the inside of the valve, coaxially with the direction of the inlet duct 2, until surpassing the access to both outlet ducts 3, 4. Thus, the fluid penetrating the valve through the inlet duct 2 is forced to pass through the filter 21, when it is present, before its passage through both outlet ducts 3, 4, thus assuring an absence of unwanted particles in the outflows. Since the stopper 7 can be unscrewed from its coupling with the tubular portion 6, the filter 21 can be removed and suitably cleaned, for its subsequent reuse. The tightness between the stopper 7 and the tubular portion 6 is assured by means of an O-ring 20, housed in an annular recessed made to that effect in the mentioned inner cylindrical wall 19.

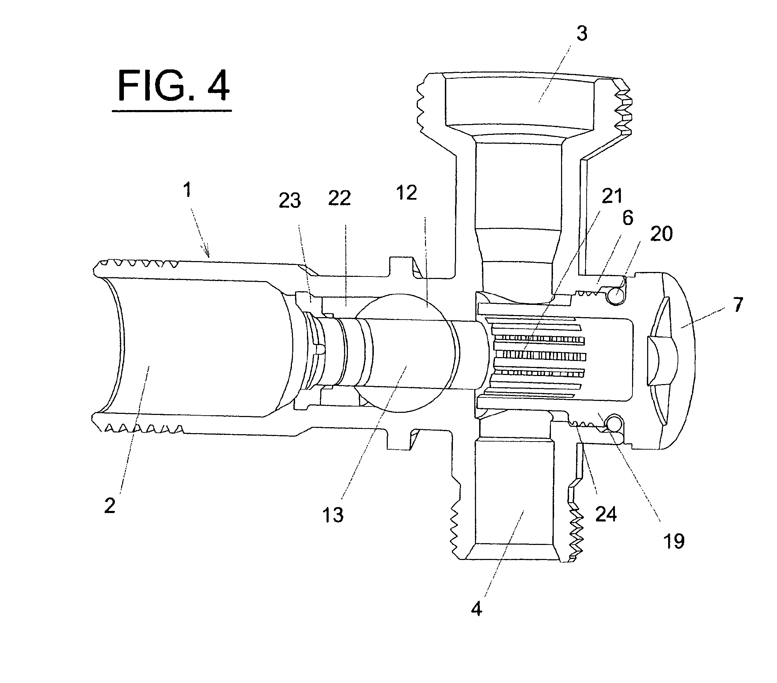

With this arrangement, the three-way valve, in its assembled condition, has the structural configuration which is shown in the section made through a mid-plane which is shown in Figure 4. This depiction shows the sphere 12 of the flow valve positioned such that the inner straight conduit 13 is aligned with the inlet duct 2, thus facilitating the passage of the fluid towards both outlet ducts 3, 4. The depicted valve is provided with a filter 21, which is shown in its operational position, i.e., covering the mouths of access to both outlets, such that the fluid supplied from the inlet 2 must necessarily pass through said filter before accessing the mentioned outlet ducts. The figure furthermore shows the threaded coupling portion 24 between the inner cylindrical wall 19 of the stopper 7 and the inner surface of the tubular portion 6, whereas, additionally, it also allows observing the position of the valve seat 22 maintained in its position by means of a securing part 23 which, by means of its end tabs, is anchored in a corresponding annular recess made in the inner face of the inlet duct.

Preferably, according to a constructive aspect of the embodiment of the invention which has just been described, the element of rod 14 - sphere 13 is made in a material based on acetal polymer, whereby the formation of lime therein is prevented or at least made difficult.

It is not considered necessary to extend the content of the present description for a person skilled in the art to understand its scope and the advantages derived therefrom, as well as to carry out the practical embodiment of its object.

Despite the foregoing, and since the description made corresponds only to a preferred embodiment, it will be understood that, within its essence, multiple modifications and variations of detail can be introduced, which are likewise comprised within the scope of the invention and which may particularly affect features such as the shape, the size or the manufacturing materials, or any others which do not alter the invention as it has been described and as it is defined in the attached claims.

## Claims

1. A three-way valve, particularly a valve for fluids which is structured based on a valve body (1) adopting a general "T" shape, which comprises an inlet duct (2) and two outlet ducts (3, 4), wherein both outlet ducts (3, 4) are mutually aligned with one another and extended in a direction orthogonal to the direction of the inlet duct (2), wherein the control of the passage of fluid is exerted from the outside through a quarter-turn control (5), **characterized in that** the three-way valve comprises a single fluid flow control valve, assembled through a valve neck (8) emerging from the inlet duct (2) in a position close to the meeting node of the branches of the "T", the flow valve plug of which has a sphere (12) with a single passage channel (13) for the simultaneous passage of fluid towards both outlet ducts (3, 4), integral with a plug rod (14) having a cylindrical portion with annular recesses for the inclusion of respective O-rings (15) for tightness, the plug rod (14) being maintained in an operational position by means of a retaining clamp (11).

2. The three-way valve according to claim 1, **characterized in that** the valve body (1) furthermore has a tubular portion (6) projected from the meeting node of both branches of the "T" in a relation of opposition and axial coincidence with the inlet duct (2), with the free end of said tubular portion (6) closed by means of a stopper (7) secured by means of threading in the likewise threaded inner surface of the mentioned tubular portion (6).

3. The three-way valve according to claim 1, **characterized in that** the clamp (11) is of a type having several regularly spaced tabs (10) emerging from its periphery, adapted for their insertion inside an inner groove (9) made in the valve neck (8).

4. The three-way valve according to claims 1 to 3, **characterized in that** the stopper (7) has an inner wall (19) with a cylindrical configuration, with the capacity to allow the possible insertion of a removable filter element (21).

5. The three-way valve according to claims 1 to 3, **characterized in that** the filter (21) is integral with the stopper (7), forming a single part with the latter.

6. The three-way valve according to claims 4 and 5, **characterized in that** the filter (21), when it is present, is of a length such that it is projected through the inside of the valve coaxially with the inlet duct (2), until surpassing the access to both outlet ducts (3, 4), for the purpose of assuring a filtration of the fluid which accesses from the inlet duct (2) towards each of the mentioned outlet ducts (3, 4).

7. The three-way valve according to one or more of claims 1 to 6, **characterized in that** the filter (21), either as a separate element or in a single part with the stopper (7), is reusable after being removed and cleaned.

8. The three-way valve according to one or more of claims 1 to 7, **characterized in that** the assembly of rod-sphere (14-12) of the fluid flow control valve is constructed in a single part, based on a material preventing or making difficult the formation of lime thereon.

9. The three-way valve according to claim 8, **characterized in that** the preferred material for manufacturing the assembly of rod-sphere (14-12) of the fluid flow control valve is an acetal polymer.
